# EUROPÄISCHE PATENTSCHRIFT

(11) **EP 1 424 254 B1**
(45) Veröffentlichungstag und Bekanntmachung des Hinweises auf die Patenterteilung: **05.10.2005**
(21) Anmeldenummer: 04004606.2
(22) Anmeldetag: 03.07.1997
(51) Int. Cl.: B60T 8/60

(54) **Verfahren zur Durchführung eines automatischen Bremsvorgangs**
Method for applying an automatic braking
Méthode pour appliquer un freinage automatique

(30) Priorität: 20.07.1996 DE 19629229
(43) Veröffentlichungstag der Anmeldung: 02.06.2004
(62) Teilanmeldung aus: 97111217.2
(73) Patentinhaber: DaimlerChrysler AG, 70567 Stuttgart (DE)
(72) Erfinder: Clauss, Johannes, 74321 Bietigheim-Bissingen (DE); Klinkner, Walter, 70619 Stuttgart (DE); Knoff, Bernd, 73734 Esslingen (DE); Steiner, Manfred, 71364 Winnenden (DE)

(56) Entgegenhaltungen:
- DE-C- 4 325 940
- DE-C- 4 338 070
- DE-C- 4 413 172
- US-A- 4 146 108

## Beschreibung

Die Erfindung betrifft Verfahren zur Durchführung eines automatischen Bremsvorgangs nach dem Oberbegriff der Patentanspruches 1.

Ein gattungsgemäß zugrundegelegtes Verfahren ist aus der Zeitschrift "Auto Motor und Sport", Verlag Motorsportpresse Stuttgart, Heft 12/1996 vom 31. Mai 1996, Seite 40 bekannt.

Gemäß dem gattungsgemäß zugrundegelegten Verfahren wird dann, wenn die Rücknahmegeschwindigkeit des Gaspedals einen Schwellenwert überschreitet und ein Umsetzen des Fußes des Fahrers vom Gaspedal auf das Bremspedal festgestellt wird, ein automatischer Bremsvorgang ausgelöst, während dessen in den Radbremsen ein Bremsdruck erzeugt wird. Gemäß diesem Verfahren wird der automatische Bremsvorgang dann beendet, wenn entweder eine bestimmte Zeit seit dem Auslösen des Bremsvorgangs überschritten wird oder wenn eine Betätigung des Bremspedal durch den Fahrer erfolgt.

Des weiteren ist aus der DE 44 13 172 C1 ein Verfahren zur Durchführung eines automatischen Bremsvorgangs bekannt, bei dessen Durchführung ein Bremsdruck erzeugt wird, der größer ist, als es der Stellung des Bremspedals entspricht. Die Auslösung des automatischen Bremsvorgangs erfolgt dann, wenn die Betätigungsgeschwindigkeit des Bremspedals einen Schwellenwert überschreitet. Der Schwellenwert wird dabei in Abhängigkeit der Abfolge von Pedalbetätigungen sowie der Art und Weise ihrer Durchführung an die aktuelle Fahrsituation angepasst. Ein automatischer Bremsvorgang wie er in der DE 44 13 172 C1 beschrieben wird, kann beispielsweise durch ein Abbruchkriterium entsprechend der DE 43 38 070 C1 beendet werden. Weitere Kriterien zum Beenden eines automatischen Bremsvorgangs sind in der DE 43 25 940 C1 beschreiben. Auf diese beiden Druckschriften wird insoweit ausdrücklich Bezug genommen.

Das gattungsgemäß zugrundegelegte Verfahren ist zwar in der Lage frühzeitig - schon vor der Betätigung des Bremspedals - einen automatischen Bremsvorgang einzuleiten. Es ist aber nicht dazu in der Lage in einer kritischen Fahrsituation den Aufbau eines Bremsdrucks während der Betätigung des Bremspedals durch den Fahrer zu unterstützen.

Andererseits ist ein Verfahren nach der DE 44 13 172 C1 nicht dazu in der Lage, eine Gefahrensituation schon vor der Betätigung des Bremspedals durch den Fahrer zu erkennen. Somit wird gegenüber dem gattungsgemäß zugrundegelegten Verfahren Zeit für den Bremsdruckaufbau verloren.

Aufgabe der Erfindung ist es daher, ein Verfahren zu schaffen, das in kritischen Fahrsituationen einen automatischen Bremsvorgang möglichst frühzeitig auslöst, wobei unnötige Notbremsvorgänge vermieden werden sollen.

Diese Aufgabe wird bei Zugrundelegen der gattungsgemäßen Verfahrensschritte erfindungsgemäß durch die kennzeichnenden Merkmale des Patentanspruches 1 gelöst.

Gemäß Patentanspruch 1 ist es nicht erforderlich, das Umsetzen des Fahrerfußes zwischen dem Gaspedal und dem Bremspedal zu erfassen. Der automatische Bremsvorgang wird dann alleine aufgrund der Gaspedalrücknahmegeschwindigkeit ausgelöst. Auch dieser Eingriff ist zeitlich zu begrenzen, damit nicht unbeabsichtigt das Fahrzeug zu sehr gebremst wird.

In einer Ausgestaltung gemäß dem Anspruch 4 bedarf es neben der rechtzeitigen Betätigung des Bremspedals auch zusätzlich einem Anstieg der Betätigungskraft des Bremspedals über einen Betätigungskraftschwellenwert hinaus um den automatischen Bremsvorgang fortzusetzen. Hierbei ist es gemäß den Ausgestaltungen der Patentansprüche 6, 7 und 8 von besonderem Vorteil, wenn der Bremsdruck in den Radbremsen begrenzt wird, damit die vor Betätigung der Bremse erzielte Bremswirkung gering bleibt. Im Falle von kritischen Fahrsituationen wird dabei immer noch eine Verkürzung des benötigten Bremswegs erreicht, da es möglich ist, das Lüftspiel der Radbremszylinder auch ohne Erzeugen einer Bremswirkung zu überwinden und gemäß einer der Ausgestaltung der Erfindung eine weitere Erhöhung des Bremsdrucks durch den Aufbau von Bremsdruck in den Hauptbremsleitungen erzeugt werden kann.

Gemäß den Ausgestaltungen der Erfindung nach den Patentansprüchen 3 und 4 wird als die Betätigung des Bremspedals repräsentierende Größe der Pedalweg, die Pedalbetätigungsgeschwindigkeit, die Betätigungskraft oder der Bremsdruck in den Hauptbremsleitungen herangezogen.

Weitere Ausgestaltungen der Erfindung betreffen die Bestimmung des zweiten Zeitschwellenwertes, der die Zeit nach dem Schalten des Bremslichtschalters betrifft und die Bestimmung des Anstiegsschwellenwertes.

Die Ausgestaltungen der Ansprüche 6 bis 9 betreffen den in den Radbremsen zu erzeugenden Bremsdruck nach dem Auslösen des automatischen Bremsvorgangs, wobei dieser Bremsdruck sowohl auf ein bestimmtes Maß begrenzt als auch so geregelt sein kann, dass die Fahrzeugverzögerung ein bestimmtes Maß nicht überschreitet. Diese Ausgestaltungen haben den Vorteil, dass sie die Verzögerung des Fahrzeugs vor dem Betätigen des Bremspedals durch den Fahrer begrenzen und daher ein unangenehmes Rucken des Fahrzeugs bei einem Abbruch des automatischen Bremsvorganges vermeiden. Ferner wird das Verhalten des Fahrzeugs für den nachfolgenden Fahrer besser einschätzbar.

Die Ausgestaltungen der Ansprüche 10 und 11 betreffen vorteilhafte Ausgestaltungen des automatischen Bremsvorgangs nachdem der Anstiegsschwellenwert überschritten worden ist. Demnach wird dann in den Radbremsen ein Bremsdruck erzeugt, der größer ist als der Bremsdruck, der der Stellung des Bremspedals entspricht. Insbesondere kann ein solcher Bremsdruck erzeugt werden, dass an wenigstens einem Teil der Räder eine Regelung des Bremsdrucks durch ein Antiblockiersystem erfolgt.

Weitere vorteilhafte Ausgestaltungen können auch den Unteransprüchen entnommen werden. Im übrigen ist die Erfindung an Hand der in der Zeichnung dargestellten Ausführungsbeispiele nachfolgend erläutert; dabei zeigen:
- Fig. 1: eine schematische Darstellung einer Anordnung zur Durchführung erfindungsgemäßer Verfahren;
- Fig. 2: das Flussdiagramm eines erfindungsgemäßen Verfahrens, bei dem die Auslösung des automatischen Bremsvorgangs lediglich aufgrund der Rücknahmegeschwindigkeit des Gaspedals erfolgt.

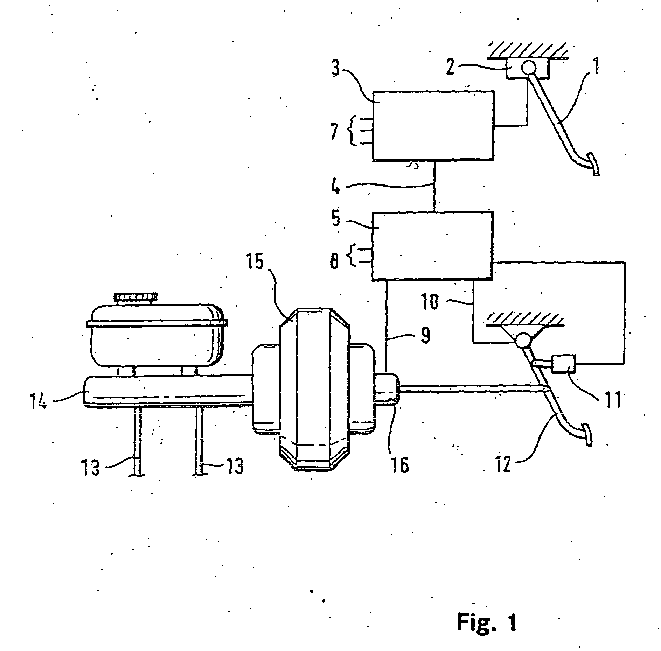

Die Fig. 1 zeigt die schematische Darstellung einer Anordnung zur Durchführung erfindungsgemäßer Verfahren. Die Stellung des Gaspedals 1 wird durch den Pedalwegsensor 2 erfasst und an die Gassteuereinrichtung 3 weitergeleitet. In dieser Gassteuereinrichtung kann aus der erfassten Stellung des Gaspedals die Gaspedalrücknahmegeschwindigkeit vg ermittelt werden. Die Gassteuereinrichtung 3 ist über die Datenleitung 4 mit der Steuereinrichtung 5 für den automatischen Bremsvorgang verbunden. Beide Steuereinrichtungen können über weitere Datenleitungen 7 bzw. 8 mit weiteren Sensoren, Stelleinrichtungen (beispielsweise den Bremsdrucksteuerventilen des Antiblockiersystems) und Steuergeräten verbunden sein. Der Steuereinrichtung 5 wird über die Leitung 10 ferner ein Signal des Pedalwegs des Bremspedals 12 zugeführt. Der Bremslichtschalter 11 schaltet einerseits die Bremsleuchten (nicht zeichnerisch dargestellt), sein Signal wird jedoch auch der Steuereinrichtung 5 zugeführt. Die Steuereinrichtung steuert über die Steuerleitung 9 das Schaltventil 16 des Bremskraftverstärkers 15 an. Dadurch kann die Druckdifferenz zwischen den Kammern des Bremskraftverstärkers verändert werden. Somit kann einerseits unabhängig von der Betätigung des Bremspedals 12 ein Bremsdruck und andererseits ein Bremsdruck, der größer ist, als der der Stellung des Bremspedals entsprechende Bremsdruck durch den Hauptbremszylinder 14 in den Hauptbremsleitungen 13 erzeugt werden.

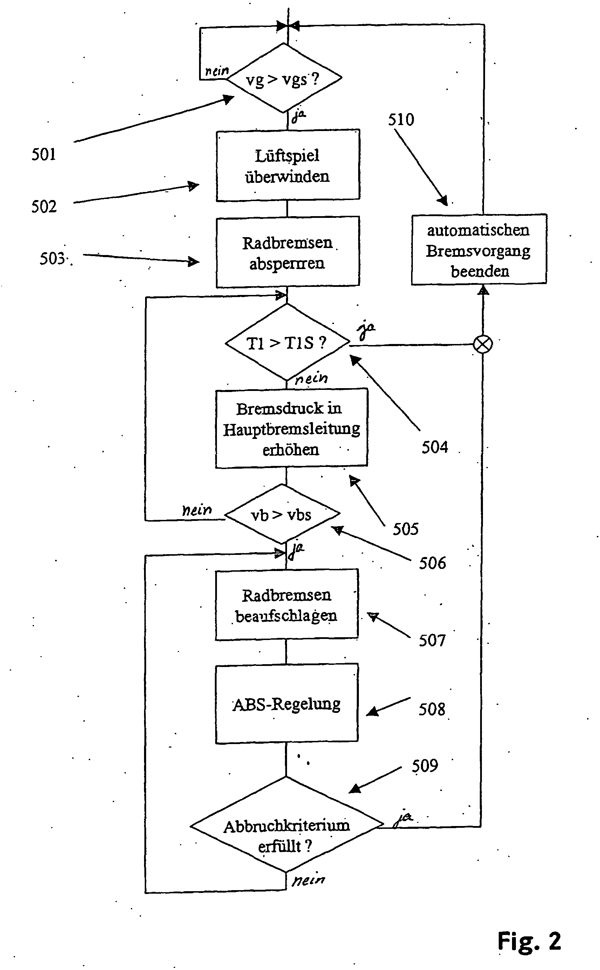

In einer Ausgestaltung des erfindungsgemäßen Verfahrens nach Fig. 2 wird gemäß dem Schritt 501 überprüft, ob die Rücknahmegeschwindigkeit vg des Gaspedals einen Schwellenwert vgs überschreitet oder nicht. Falls dies nicht der Fall ist, wird zum Schritt 501 zurückgesprungen. Andernfalls wird gemäß dem Schritt 502 in den Radbremsen ein solcher Bremsdruck erzeugt, dass die Bremsbeläge an den Bremsscheiben anliegen. Dies ist bei einem Druck in der Größenordnung von 1 bis 2 bar der Fall. Alternativ dazu kann auch ein Bremsdruck der Größenordnung von 5 bis 10 bar erzeugt, was üblicherweise einer Verzögerung des Fahrzeugs zwischen 1 m/s² und 2 m/s² entspricht. Im Anschluss daran wird gemäß dem Schritt 503 die Druckzufuhr zu den Radbremsen gesperrt, so dass der Bremsdruck in den Radbremszylindern konstant bleibt. Dies kann insbesondere durch Ansteuern der Bremsdruckregelventile, wie sie für ein ABS benötigt werden, geschehen.

Gemäß dem Schritt 504 wird dann überprüft, ob die erste Zeiterfassung T1 einen ersten Zeitschwellenwert überschritten hat. Ist dies der Fall so wird zum Schritt 510 gesprungen.

Andernfalls wird im Schritt 505 der Bremsdruck in den zu den Radbremsen führenden Hauptbremsleitungen weiter erhöht. Danach wird im Schritt 506 überprüft ob ein die Betätigung des Bremspedals durch den Fahrer repräsentierende Größe einen Anstiegsschwellenwert überschritten hat. Solange dies nicht der Fall ist wird zum Schritt 504 zurückgesprungen. Andernfalls wird der automatische Bremsvorgang gemäß dem Schritt 507 fortgeführt, indem die fluidische Verbindung zwischen den Radbremszylindern und den Hauptbremsleitungen wieder geöffnet wird. Dadurch wird der erhöhte Bremsdruck der Hauptbremsleitungen in die Radbremszylinder eingeleitet, so dass sehr schnell eine hohe Verzögerung des Fahrzeugs erreicht wird, dabei kann es gemäß dem Schritt 508 erforderlich sein eine Bremsdruckregelung durch das Antiblockiersystem (ABS) vorzunehmen. Der in die Radbremsen eingeleitete Bremsdruck ist dabei größer als der Bremsdruck, der der Stellung des Bremspedals entspricht.

Im Schritt 509 wird nunmehr überprüft, ob ein Abbruchkriterium für den automatischen Bremsvorgang erfüllt ist, Ist dies nicht der Fall, so wird zum Schritt 507 zurückgesprungen. Ist das Abbruchkriterium erfüllt wird zum Schritt 510 gesprungen. Im Schritt 510 wird der automatische Bremsvorgang beendet. Dazu ist es zunächst erforderlich den Bremsdruck in den Radbremsen auf das der Stellung des Bremspedals entsprechende Niveau abzusenken, das ggf. auch die drucklose Bremse (nicht betätigtes Bremspedal) sein. Anschließend kann zum Schritt 501 zurückgesprungen werden.

Eine besonders günstige Ausgestaltung einer Bremsanlage zur Durchführung des vorgenannten Verfahrens ist dann gegeben, wenn mit Beginn des automatischen Bremsvorgangs die hydraulische Verbindung zwischen Hauptbremszylinder und Radbremsen unterbrochen wird und das Bremspedal lediglich gegen die Kraft eines Pedalwegsimulators arbeitet. Der Bremsdruck an den Radbremsen wird dann durch eine Fremdkraftdruckquelle aufgebracht. In diesem Fall kann der Pedalweg des Bremspedals besonders einfach als Kriterium zur Weiterführung des automatischen Bremsvorgangs herangezogen werden, da keine Rückwirkung der Bremsdruckerzeugung auf das Bremspedal eintritt.

## Patentansprüche

1. Verfahren zur Durchführung eines automatischen Bremsvorgangs,
- wobei die Gaspedalrücknahmegeschwindigkeit (vg) erfasst wird,
- und dann, wenn die Gaspedalrücknahmegeschwindigkeit (vg) einen Schwellenwert (vgs) überschreitet, ein automatischer Bremsvorgang ausgelöst wird,
- wobei das Auslösen des automatischen Bremsvorgangs eine erste Zeiterfassung (T1) auslöst,
- wobei mit Auslösung des automatischen Bremsvorgangs ein Bremsdruck erzeugt wird,
- und wobei der automatische Bremsvorgang mit Überschreiten eines ersten Zeitgrenzwertes (T1S) beendet wird, sofern nicht zuvor eine die Betätigung des Bremspedals repräsentierende Größe (vb) einen Anstiegsschwellenwert (vbs) überschritten hat.

2. Verfahren nach Anspruch 1,
**dadurch gekennzeichnet,**
**dass** mit der Betätigung des Bremspedals durch den Fahrer eine zweite Zeiterfassung (T2) ausgelöst wird, wobei der automatische Bremsvorgang beendet wird, wenn entweder
- der Anstiegsschwellenwert (vbs) durch die die Betätigung des Bremspedals repräsentierende Größe (vb) nicht vor Oberschreiten des ersten Zeitgrenzwertes (TlS) durch die erste Zeiterfassung (T1) erfolgt oder
- die Betätigungskraft des Bremspedals nicht vor Überschreiten eines zweiten Zeitschwellenwertes (T2S) größer ist als ein vorgegebener Betätigungskraftschwellenwert (FbS).

3. Verfahren nach Anspruch 1 oder 2,
**dadurch gekennzeichnet,**
**dass** die die Betätigung des Bremspedals (12) repräsentierende Größe der Pedalweg oder die Betätigungsgeschwindigkeit des Bremspedals ist.

4. Verfahren nach einem der Ansprüche 1 bis 3,
**dadurch gekennzeichnet,**
**dass** die die Betätigung des Bremspedals (12) repräsentierende Größe die Betätigungskraft des Bremspedals ist.

5. Verfahren nach Anspruch 4,
**dadurch gekennzeichnet,**
**dass** der Betätigungskraftschwellenwert im Bereich von 100 bis 200 N Pedalkraft und der zweite Zeitgrenzwert (T2S) im Bereich von 100ms bis 300ms liegt.

6. Verfahren nach Anspruch 1,
**dadurch gekennzeichnet,**
**dass** nach dem Auslösen des automatischen Bremsvorgangs und vor dem Überschreiten des Anstiegsschwellenwertes (vbs) durch die Betätigung des Bremspedals repräsentierende Größe (vb) der erzeugte Bremsruck auf einen Wert begrenzt ist, der dem Anlegen der Bremsbeläge an die Bremsscheibe entspricht.

7. Verfahren nach Anspruch 1,
**dadurch gekennzeichnet,**
**dass** der vor Betätigung des Bremspedals durch den Fahrer erzeugte Bremsdruck auf einen Wert unterhalb von 10 bar, insbesondere auf einen Wert zwischen 5 bar und 10 bar, begrenzt ist.

8. Verfahren nach Anspruch 1,
**dadurch gekennzeichnet,**
**dass** spätestens dann, wenn in den Radbremsen ein Bremsdruck erzeugt ist, der dem Anlegen der Bremsbeläge an die Bremsscheibe entspricht, die Radbremszylinder gegenüber den Hauptbremsleitungen abgesperrt werden, wobei in den Hauptbremsleitungen ein weiterer Druckanstieg möglich ist, und wobei das Absperren der Hauptbremsleitungen gegenüber den Radbremsen mit Betätigung des Bremspedals durch den Fahrer festgestellt wird.

9. Verfahren nach einem der Ansprüche 1 bis 8,
**dadurch gekennzeichnet,**
**dass** der Bremsdruck in den Radbremsen während der Durchführung des automatischen Bremsvorgangs durch ein Antiblockiersystem begrenzt ist.

10. Verfahren nach einem der Ansprüche 1 oder 2 oder 6 bis 8,
**dadurch gekennzeichnet,**
**dass** nach dem Überschreiten des Anstiegsschwellenwertes (vbs) durch den Gradienten (vb) der die Betätigung des Bremspedals repräsentierenden Größe, ein Bremsdruck erzeugt wird, der größer ist als der Bremsdruck, der der Betätigung des Bremspedals (12) durch den Fahrer entspricht.

11. Verfahren nach Anspruch 10,
**dadurch gekennzeichnet,**
**dass** der nach dem Überschreiten des Anstiegsschwellenwertes (vbs) durch den Gradienten (vb) der die Betätigung des Bremspedals (12) repräsentierenden Größe erzeugte Bremsdruck so groß ist, dass an wenigstens einem Teil der Räder eine Regelung des Bremsdrucks durch das Antiblockiersystem erfolgt.

12. Verfahren nach Anspruch 1 oder nach einem der Ansprüche 9 bis 11,
**dadurch gekennzeichnet,**
**dass** der Anstiegsschwellenwert (vbs) für den Gradienten (vb) der die Betätigung des Bremspedals repräsentierenden Größe in Abhängigkeit der Gaspedalrücknahmegeschwindigkeit (vg) bestimmt wird.

13. Verfahren nach Anspruch 1,
**dadurch gekennzeichnet,**
**dass** die Bremsleuchten unabhängig von dem Schalten des Bremslichtschalters (11, BLS) durch das Auslösen des automatischen Bremsvorgangs in Betrieb genommen werden.

14. Verfahren nach Anspruch 13,
**dadurch gekennzeichnet,**
**dass** der Betrieb der Bremsleuchten sich zumindest in der Zeit, in der das Bremspedal (12) nicht vom Fahrer betätigt ist von dem Normalbetrieb der Bremsleuchten sichtbar unterscheidet.

15. Verfahren nach einem der vorstehenden Ansprüche,
**dadurch gekennzeichnet,**
**dass** nach dem Beenden des automatischen Bremsvorgangs durch Erfüllen eines Abbruchkriteriums oder nach dem Nichtübersteigen des Anstiegsschwellenwertes innerhalb des dafür vorgesehenen Zeitintervalls in den Radbremsen der Bremsdruck eingesteuert wird, der der Stellung des Bremspedals entspricht.

## Claims

1. Method for carrying out an automatic braking process,
- wherein the speed of return of the accelerator (vg) is determined,
- and then, if the speed of return of the accelerator (vg) exceeds a threshold value (vgs), an automatic braking process is triggered,
- wherein the triggering of the automatic braking process triggers a first time determination (T1),
- wherein with the triggering of the automatic braking process a brake pressure is produced,
- and wherein the automatic braking process is ended with the exceeding of a first time threshold (TIS) insofar as prior to this a value (vb) representing the activation of the brake pedal has not exceeded an increase threshold value (vbs).

2. Method according to claim 1,
**characterised in that**
with the activation of the brake pedal by the driver a second time determination (T2) is triggered wherein the automatic braking process is ended if either
- the increase threshold value (vbs) is not effected through the value (vb) representing the activation of the brake pedal prior to exceeding of the first time threshold (TIS) through the first time determination (TI) or
- the activating force of the brake pedal prior to exceeding of a second time threshold (T2S) is not greater than a pre-specified activating force (FbS).

3. Method according to claim 1 or 2,
**characterised in that**
the value representing the activation of the brake pedal (12) is the pedal path or the activating speed of the brake pedal.

4. Method according to one of the claims 1 to 3,
**characterised in that**
the value representing the activation of the brake pedal (12) is the activating force of the brake pedal.

5. Method according to claim 4,
**characterised in that**
the activating force threshold lies in the range of 100 to 200 N pedal force and the second time threshold (T2S) lies in the range of 100 ms to 300 ms.

6. Method according to claim 1,
**characterised in that**
after the triggering of the automatic braking process and prior to the exceeding of the increase threshold value (vbs) through the value (vb) representing the activation of the brake pedal the brake pressure is limited to a value which corresponds to the brake pads lying on the brake disk.

7. Method according to claim 1,
**characterised in that**
the brake pressure produced prior to the activation of the brake pedal by the driver is limited to a value below 10 bar, in particular to a value between 5 bar and 10 bar.

8. Method according to claim 1,
**characterised in that**
the wheel brake cylinder is locked in relation to the main brake lines at the latest when a brake pressure is produced in the wheel brakes which corresponds to the brake pads lying on the brake disc wherein a further pressure increase is possible in the main brake lines and wherein the locking of the main brake lines in relation to the wheel brakes is established with the activation of the brake pedal by the driver.

9. Method according to one of the claims 1 to 8,
**characterised in that**
the brake pressure in the wheel brakes during the implementation of the automatic braking process is limited by an anti-locking system.

10. Method according to one of the claims 1 or 2 or 6 to 8,
**characterised in that**
after the exceeding of the increase threshold (vbs) by the gradient (vb) of the value representing the activation of the brake pedal a brake pressure is produced which is greater than the brake pressure which corresponds to the activation of the brake pedal (12) by the driver.

11. Method according to claim 10,
**characterised in that**
the brake pressure produced after the exceeding of the increase threshold (vbs) by the gradient of the value representing the activation of the brake pedal (12) is so great that regulation of the brake pressure by the anti-locking system takes place at least partially on the wheels.

12. Method according to claim 1 or according to one of the claims 9 to 11,
**characterised in that**
the increase threshold value (vbs) for the gradient (vb) of the value representing the activation of the brake pedal is determined depending upon the speed of return of the accelerator (vg).

13. Method according to claim 1,
**characterised in that**
the brake lights are brought into operation independently of the switching of the brake light switch (11, BLS) through the triggering of the automatic braking process.

14. Method according to claim 13,
**characterised in that**
the operation of the brake lights visibly differs from the normal operation of the brake lights at least during the time in which the brake pedal (12) is not activated by the driver.

15. Method according to one of the preceding claims,
**characterised in that**
after the end of the automatic braking process through the fulfilment of a termination criterion or after the non-exceeding of the increase threshold within the interval of time provided for this the brake pressure is controlled in the wheel brakes which corresponds to the position of the brake pedal.

## Revendications

1. Procédé pour effectuer un processus automatique de freinage,
- selon lequel la vitesse de retour de la pédale d'accélérateur (vg) est détectée,
- et, ensuite, lorsque la vitesse de rappel de pédale d'accélérateur (vg) dépasse une valeur de seuil (vgs), un processus automatique de freinage est déclenché,
- selon lequel le déclenchement du processus automatique de freinage déclenche une première détection du temps (T1),
- selon lequel une pression de freinage est générée avec le déclenchement du processus automatique de freinage,
- et selon lequel le processus automatique de freinage est achevé avec le dépassement d'une première valeur de limite de temps (TlS), dans la mesure où une grandeur (vb), représentant l'actionnement de la pédale de frein, n'a pas préalablement dépassé une valeur de seuil d'augmentation (vbs).

2. Procédé selon la revendication 1, **caractérisé en ce que**, avec l'actionnement de la pédale de frein par le conducteur, est déclenchée une deuxième détection de temps (T2), le processus automatique de freinage étant achevé si, soit
- avant le dépassement de la première valeur limite de temps (T1S) par la première détection de temps (T1), la valeur de seuil d'augmentation (vbs) n'a pas été atteinte par la grandeur (vb) représentant l'actionnement de la pédale de frein, soit
- avant le dépassement d'une deuxième valeur de seuil de temps (T2S), la force d'actionnement de la pédale de frein n'est pas supérieure à une valeur de seuil de force d'actionnement (FbS) prédéterminée.

3. Procédé selon la revendication 1 ou 2, **caractérisé en ce que** la grandeur, représentant l'actionnement de la pédale de frein (12), est la course de pédale ou la vitesse d'actionnement de la pédale de frein.

4. Procédé selon l'une des revendications 1 à 3, **caractérisé en ce que** la grandeur, représentant l'actionnement de la pédale de frein (12), est la force d'actionnement de la pédale de frein.

5. Procédé selon la revendication 4, **caractérisé en ce que** la valeur de seuil de force d'actionnement est dans la fourchette de 100 à 200 N de force appliquée sur la pédale, et la deuxième valeur limite de temps (T2S) est dans fourchette de 100 ms à 300 ms.

6. Procédé selon la revendication 1, **caractérisé en ce que**, après le déclenchement du processus automatique de freinage, et avant dépassement de la valeur seuil d'augmentation (vbs), par la grandeur (vb) représentant l'actionnement de la pédale de frein, la pression de freinage produite est limitée à une valeur correspondant à l'application des garnitures de frein sur le disque de frein.

7. Procédé selon la revendication 1, **caractérisé en ce que** la pression de freinage, produite avant l'actionnement de la pédale de frein par le conducteur, est limitée à une valeur inférieure à 10 bar, en particulier à une valeur comprise entre 5 bar et 10 bar.

8. Procédé selon la revendication 1, **caractérisé en ce que**, au plus tard au moment où une pression de freinage est produite dans les freins de roue, pression correspondant à l'application des garnitures de frein sur le disque de frein, les cylindres de frein de roue sont isolés par rapport aux conduites principales de freinage, dans les conduites principales de freinage pouvant être effectuée une augmentation de pression supplémentaire et l'isolement des conduites principales de freinage, par rapport aux freins de roue, étant déterminé par l'actionnement de la pédale de frein par le conducteur.

9. Procédé selon l'une des revendications 1 à 8, **caractérisé en ce que** la pression de freinage dans les freins de roue, pendant l'accomplissement du processus automatique de freinage, est limitée par un système anti-blocage.

10. Procédé selon l'une des revendications 1 ou 2 ou 6 à 8, **caractérisé en ce que**, après dépassement de la valeur de seuil d'augmentation (vbs), par le gradient (vb) de la grandeur représentant l'actionnement de la pédale de frein est produite une pression de freinage supérieure à la pression de freinage correspondant à l'actionnement de la pédale de frein (12) par le conducteur.

11. Procédé selon la revendication 10, **caractérisé en ce que** la pression de freinage, produite après dépassement de la valeur de seuil d'augmentation (vbs), du fait du gradient (vb) de la grandeur représentant l'actionnement de la pédale de frein (12), est d'une valeur telle que, en au moins une partie des roues, se fasse une régulation de la pression de freinage, du fait du système anti-blocage.

12. Procédé selon la revendication 1 ou selon l'une des revendications 9 à 11, **caractérisé en ce que** la valeur de seuil d'augmentation (vbs), pour le gradient (vb) de la grandeur représentant l'actionnement de la pédale de frein, est déterminée en fonction de la vitesse de rappel de pédale d'accélérateur (vg).

13. Procédé selon la revendication 1, **caractérisé en ce que** les signalisations lumineuses de freinage sont mises en service, indépendamment de la commutation de l'interrupteur de signalisation lumineuse de freinage (11, BLS), du fait de déclenchement du processus automatique de freinage.

14. Procédé selon la revendication 13, **caractérisé en ce que** le fonctionnement des signalisations lumineuses de freinage se distingue de façon visible du fonctionnement normal des signalisations lumineuses de freinage, au moins pendant la durée pendant laquelle la pédale de frein (12) n'est pas actionnée par le conducteur.

15. Procédé selon l'une des revendications précédentes, **caractérisé en ce que**, après achèvement du processus automatique de freinage, en satisfaisant à un critère d'interruption, ou après non-dépassement de la valeur de seuil d'augmentation, dans les limites de l'intervalle de temps prévu pour cela, dans les freins de roue est commandée la pression de freinage correspondant au réglage de la pédale de frein.
